# EUROPEAN PATENT APPLICATION

(11) **EP 3 413 430 A1**
(43) Date of publication of application: **12.12.2018**
(21) Application number: 17747330.3
(22) Date of filing: 27.01.2017
(51) Int. Cl.: H02J 7/34, H01G 11/08, H01M 2/10, H01M 10/44, H02J 7/00, H02J 7/02

(54) **POWER STORAGE DEVICE**

(30) Priority: 01.02.2016 JP 2016017403
(71) Applicant: Kawasaki Jukogyo Kabushiki Kaisha, Kobe-shi, Hyogo 650-8670 (JP)
(72) Inventor: BANDO, Soichiro, Kobe-shi, Hyogo 650-8670 (JP); HAYASHI, Masato, Kobe-shi, Hyogo 650-8670 (JP); HAMAMATSU, Masanori, Kobe-shi, Hyogo 650-8670 (JP); EZAKI, Hideaki, Kobe-shi, Hyogo 650-8670 (JP); TOKUYAMA, Kazuma, Kobe-shi, Hyogo 650-8670 (JP); OHNO, Tatsuya, Kobe-shi, Hyogo 650-8670 (JP); TAKEDA, Kazuya, Kobe-shi, Hyogo 650-8670 (JP); KUJIME, Yasunori, Kobe-shi, Hyogo 650-8670 (JP)
(74) Representative: Dehns
(86) International application number: PCT/JP2017/003020
(87) International publication number: WO 2017/135173

(57) **Abstract**

An electric power storage apparatus (1) comprises a first electric storage device (10); and a second electric storage device (20), the first electric storage device has an inner resistance lower than an inner resistance of the second electric storage device, and has a power density higher than a power density of the second electric storage device, and the second electric storage device has an energy density higher than an energy density of the first electric storage device, the first electric storage device and the second electric storage device are connected in parallel, and a voltage window of the first electric storage device and a voltage window of the second electric storage device at least partially overlap with each other.

## Description

### Technical Field

The present invention relates to an electric power storage apparatus including an electric storage device with a high energy density and an electric storage device with a high power (output) density.

### Background Art

As an electric power storage apparatus which can achieve a high energy density and a high power density, for example, an electric power storage system disclosed in Patent Literature 1 is conventionally known. This electric power storage system includes a power converter, a secondary battery, a capacitor, and a controller. A load terminal of the power converter is connected to a load. A power supply terminal of the power converter is connected to the secondary battery and connected to the capacitor in parallel with the secondary battery via the DC/DC converter. The DC/DC converter is controlled by the controller so that the capacitor is charged and discharged with a priority over the secondary battery.

### Citation List

### Patent Literature

Japanese Laid-Open Patent Application Publication No. 2016-001936

### Summary of Invention

### Technical Problem

In the above-described electric power storage system, the capacitor is connected to the power converter via the DC/DC converter so that the capacitor is controlled to be charged and discharged with a priority over the secondary battery. For this reason, there is improvement in reduction of size and simplification of configuration of the electric power storage system.

The present invention has been developed to solve the above-described problem, and an object of the present invention is to provide an electric power storage apparatus which can achieve a high energy density and a high power density while reducing the size of the electric power storage apparatus and simplifying the configuration of the electric power storage apparatus.

### Solution to Problem

According to an aspect of the present invention, an electric power storage apparatus comprises a first electric storage device; and a second electric storage device, wherein the first electric storage device has an inner resistance lower than an inner resistance of the second electric storage device, and has a power density higher than a power density of the second electric storage device, and the second electric storage device has an energy density higher than an energy density of the first electric storage device, wherein the first electric storage device and the second electric storage device are connected in parallel, and wherein a voltage (potential) window of the first electric storage device and a voltage window of the second electric storage device at least partially overlap with each other.

In accordance with this configuration, the first electric storage device and the second electric storage device are charged and discharged and thus a high energy density and a high power density can be achieved. In this case, the first electric storage device is charged and discharged with a priority over the second electric storage device. Therefore, in a case where the first electric storage device and the second electric storage device are connected to each other, it is not necessary to interpose a DC/DC converter between them. This makes it possible to reduce the size of the electric power storage system. In addition, since the DC/DC converter is not necessary, it is not necessary to control the DC/DC converter. As a result, the configuration of the electric power storage system can be simplified.

In the electric power storage apparatus, the first electric storage device may include one or a plurality of first electric storage cells connected to each other in series, the second electric storage device may include one or a plurality of second electric storage cells connected to each other in series, and the number of the first electric storage cells connected to each other in series and the number of the second electric storage cells connected to each other in series may be set so that the voltage window of the first electric storage device and the voltage window of the second electric storage device at least partially overlap with each other. In accordance with this configuration, depending on the number of the electric storage cells connected in series in each of the electric storage devices, the voltage (potential) window of each of the electric storage devices can be suitably adjusted.

In the electric power storage apparatus, the first electric storage device may include one or a plurality of first electric storage cells connected to each other in parallel, the second electric storage device may include one or a plurality of second electric storage cells connected to each other in parallel, and the number of the first electric storage cells connected to each other in parallel and the number of the second electric storage cells connected to each other in parallel may be set so that the internal resistance of the first electric storage device becomes lower than the internal resistance of the second electric storage device. In accordance with this configuration, depending on the number of the electric storage cells connected in parallel in each of the electric storage devices, the internal resistance of each of the electric storage devices can be suitably adjusted.

In the electric power storage apparatus, one or a plurality of first electric storage cells connected to each other and one or a plurality of second electric storage cells connected to each other may be connected to each other in parallel to construct an electric storage module. In accordance with this configuration, the first electric storage cell(s) is/are charged and discharged with a priority over the second electric storage cell(s). Therefore, the second electric storage cell(s) is/are charged and discharged in a state in which the second electric storage cell(s) is/are heated by heat generated by charging and discharging the first electric storage cell(s). As a result, under a low-temperature environment, the second electric storage device can be efficiently charged and discharged by heating the second electric storage cell(s).

### Advantageous Effects of Invention

The present invention has the above-described configuration, and can obtain an advantage that it is possible to provide an electric power storage apparatus which can achieve a high energy density and a high power density while reducing the size of the electric power storage apparatus and simplifying the configuration of the electric power storage apparatus.

The above and further objects, features and advantages of the present invention will more fully be apparent from the following detailed description of preferred embodiment with reference to the accompanying drawings.

### Brief Description of Drawings

Fig. 1 is a schematic view showing the configuration of an electric power storage apparatus according to Embodiment 1 of the present invention.
Fig. 2 is a graph showing a voltage (potential) window of a first electric storage device of Fig. 1 and a voltage window of a second electric storage device of Fig. 1.
Fig. 3 is a schematic view showing a configuration for estimating a remaining capacity of the electric power storage apparatus.
Fig. 4 is a schematic view showing the configuration of an electric power storage apparatus according to Modified Example 1 of Embodiment 1.
Fig. 5 is a schematic view showing the configuration of an electric power storage apparatus according to Modified Example 2 of Embodiment 1.
Fig. 6 is a schematic view showing the configuration of an electric power storage apparatus according to Modified Example 3 of Embodiment 1.
Fig. 7 is a schematic view showing the configuration of an electric power storage apparatus according to Embodiment 2 of the present invention.
Fig. 8 is a schematic view showing the configuration of an electric power storage apparatus according to Embodiment 3 of the present invention.
Fig. 9 is a schematic view showing the configuration of an electric power storage apparatus according to Modified Example of Embodiment 3.
Fig. 10 is a schematic view showing in Examples 1 and 2 a configuration in which the electric power storage apparatus is connected to a load.

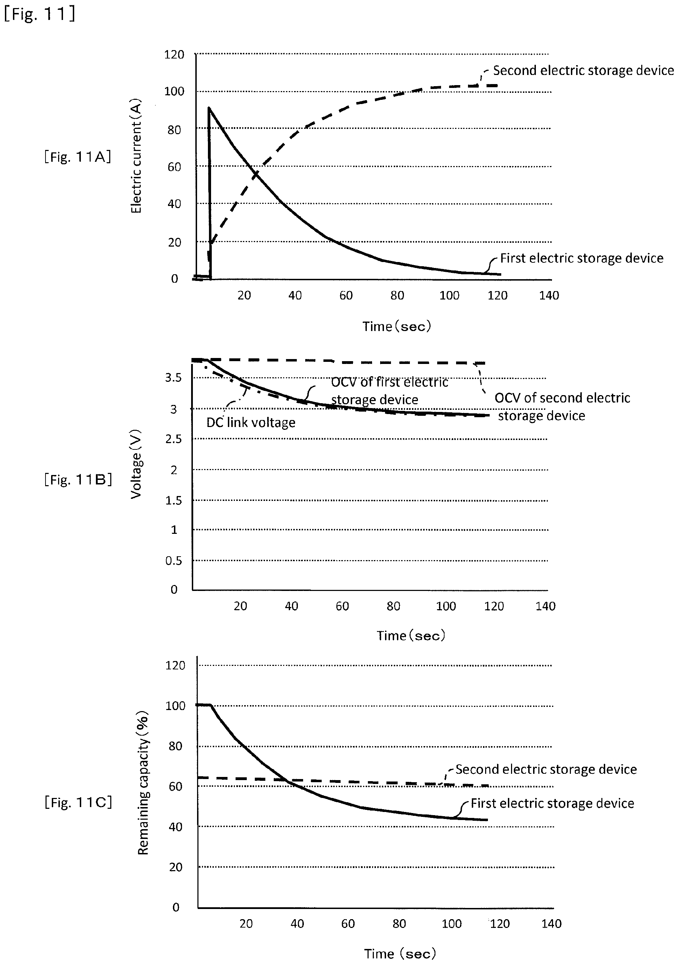

Fig. 11A is a graph showing in Example 1, a change over time of an electric current output from a first electric storage device and a change over time of an electric current output from a second electric storage device. Fig. 11B is a graph showing in Example 1, a change over time of an open circuit voltage (OCV) of the first electric storage device, a change over time of an OCV of the second electric storage device, and a change over time of a voltage between a pair of DC links. Fig. 11C is a graph showing in Example 1 a change over time of a remaining capacity of the first electric storage device and a change over time of a remaining capacity of the second electric storage device.
Fig. 12A is a graph showing in Example 2, a change over time of an electric current output from the first electric storage device to a first load and a change over time of an electric current output from the second electric storage device to the first load. Fig. 12B is a graph showing in Example 2, a change over time of an OCV of the first electric storage device with respect to the first load, a change over time of an OCV of the second electric storage device with respect to the first load, and a change over time of a voltage between the pair of DC links with respect to the first load.
Fig. 13A is a graph showing in Example 2, a change over time of an electric current output from the first electric storage device to a second load and a change over time of an electric current output from the second electric storage device to the second load. Fig. 13B is a graph showing in Example 2, a change over time of an OCV of the first electric storage device with respect to the second load, a change over time of an OCV of the second electric storage device with respect to the second load, and a change over time of a voltage between the pair of DC links with respect to the second load.
Fig. 14A is a schematic view showing in Example 3, a configuration in which the electric power storage apparatus is connected to a load. Fig. 14B is a graph showing in Example 3 a change over time of an electric current output from the first electric storage device to the second load and a change over time of an electric current output from the second electric storage device to the second load.

### Description of Embodiments

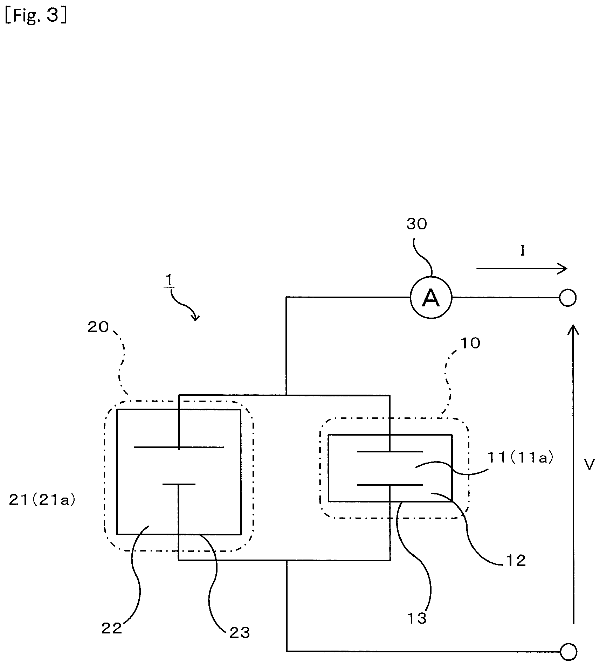

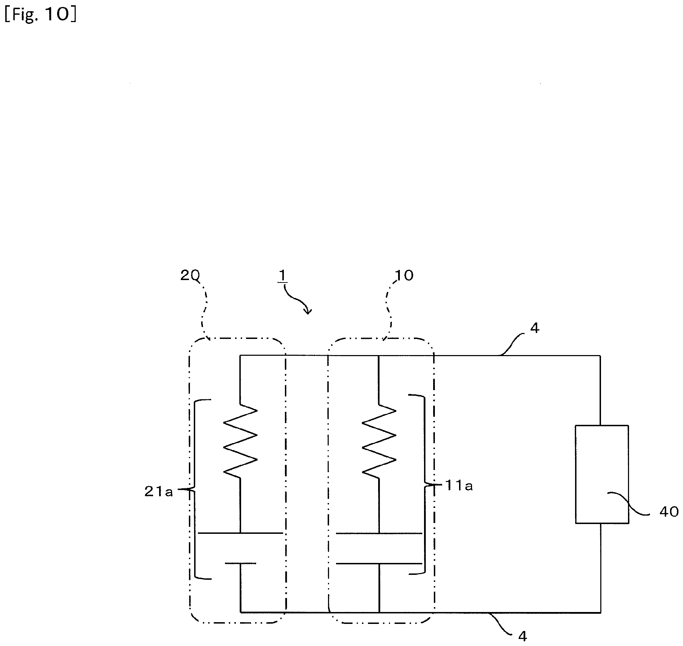

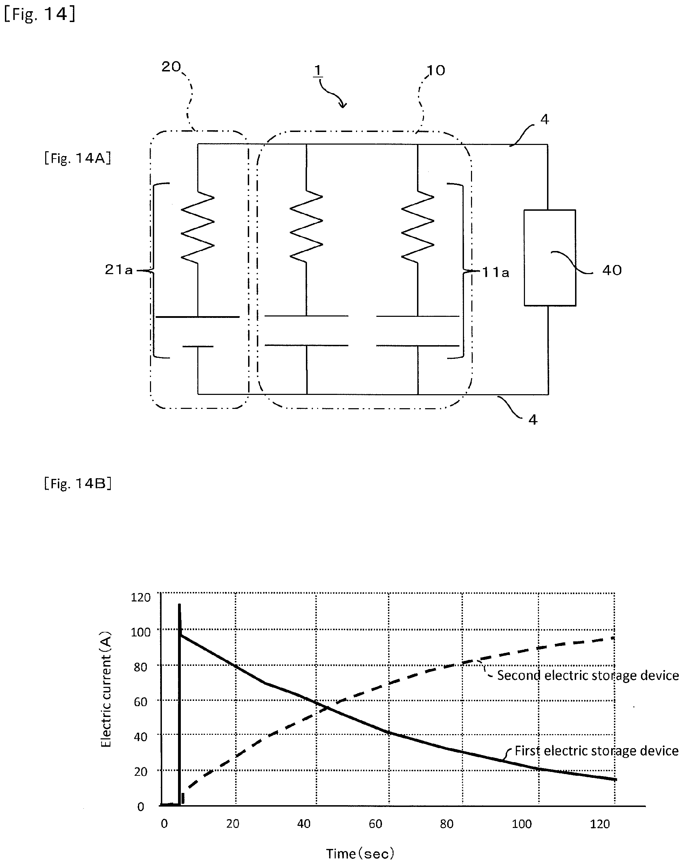

Hereinafter, the embodiments of the present invention will be described with reference to the drawings. Throughout the drawings, the same or corresponding constituents are designated by the same reference symbols, and will not be described in repetition. Although the internal resistance of a capacitor cell and the internal resistance of a secondary battery cell are shown in Figs. 10 and 14A, the internal resistance of the capacitor cell and the internal resistance of the secondary battery cell are omitted in Figs. 3 to 9.

### (Embodiment 1)

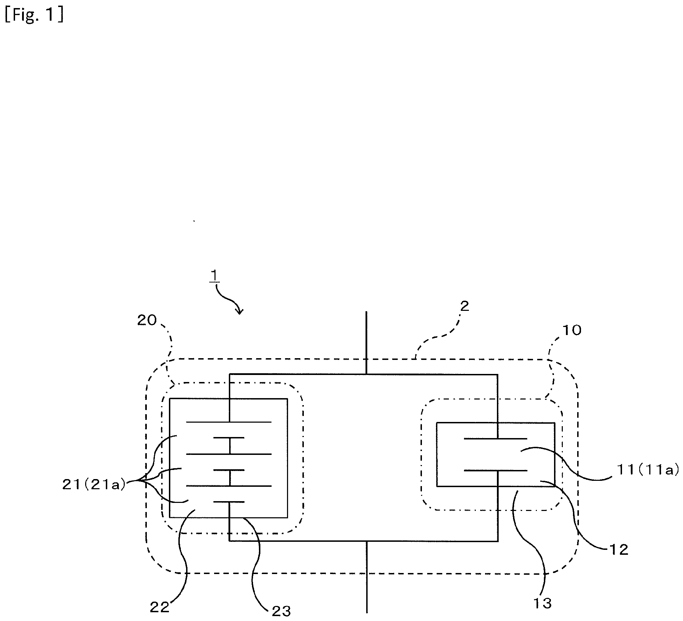

The configuration of an electric power storage apparatus 1 according to Embodiment 1 will be described with reference to Fig. 1. The electric power storage apparatus 1 includes a first electric storage device 10 and a second electric storage device 20. The first electric storage device 10 and the second electric storage device 20 are connected to each other in parallel.

The first electric storage device 10 is an electric storage unit which has an internal resistance lower than that of the second electric storage device 20 and a power density higher than that of the second electric storage device 20. In contrast, the second electric storage device 20 is an electric storage unit which has an energy density higher than that of the first electric storage device 10. In this way, the first electric storage device 10 and the second electric storage device 20 have opposite specifications regarding the internal resistance, the power density, and the energy density.

The first electric storage device 10 includes one or a plurality of first electric storage cells 11 which are connected to each other. In the present embodiment, the first electric storage device 10 includes one first electric storage cell 11. More specifically, the first electric storage device 10 of Fig. 1 includes one first electric storage module 12 in which one first electric storage cell 11 is accommodated in a first case 13. The first electric storage cell 11 may be, for example, a capacitor cell 11a.

The second electric storage device 20 includes one or a plurality of second electric storage cells 21 connected to each other. In the present embodiment, the second electric storage device 20 includes three second electric storage cells 21. Specifically, the second electric storage device 20 of Fig. 1 includes one second electric storage module 22 in which three second electric storage cells 21 connected in series are accommodated in a second case 23. The second electric storage cells 21 may be, for example, secondary battery cells 21a.

The first electric storage cell 11 is not limited to the capacitor cell 11a. The second electric storage cells 21 are not limited to the secondary battery cells 21a. Other constituents may be used so long as the first electric storage device 10 and the second electric storage device 20 have opposite specifications as described above. For example, as the first electric storage cell 11, a secondary battery with a power density higher than that of the second electric storage cell 21 may be used.

The number of the first electric storage cells 11 and the number of the second electric storage cells 21 are set so that the electric storage devices 10, 20 meet both of the following conditions (1) and (2).
(1) The internal resistance of the first electric storage device 10 is lower than that of the second electric storage device 20.
(2) A part or all of the voltage (potential) window of the first electric storage device 10 overlaps with that of the second electric storage device 20.

In the present embodiment, to meet the above-described conditions, one capacitor cell 11a is provided to correspond to the three secondary battery cells 21a connected in series. The internal resistance of the first electric storage device 10 is an electric resistance included in one capacitor cell 11a. The internal resistance of the second electric storage device 20 is an electric resistance included in the three secondary battery cells 21a connected in series and is a sum of the internal resistances of the three secondary battery cells 21a.

The voltage (potential) window of the first electric storage device 10 is, for example, a voltage range which can be used in the first electric storage device 10, or a voltage use range set by a manufacturer or a user. The voltage (potential) window of the second electric storage device 20 is, for example, a voltage range which can be used, or a voltage use range set by the manufacturer or the user, in view of electrochemical characteristics of the second electric storage device 20.

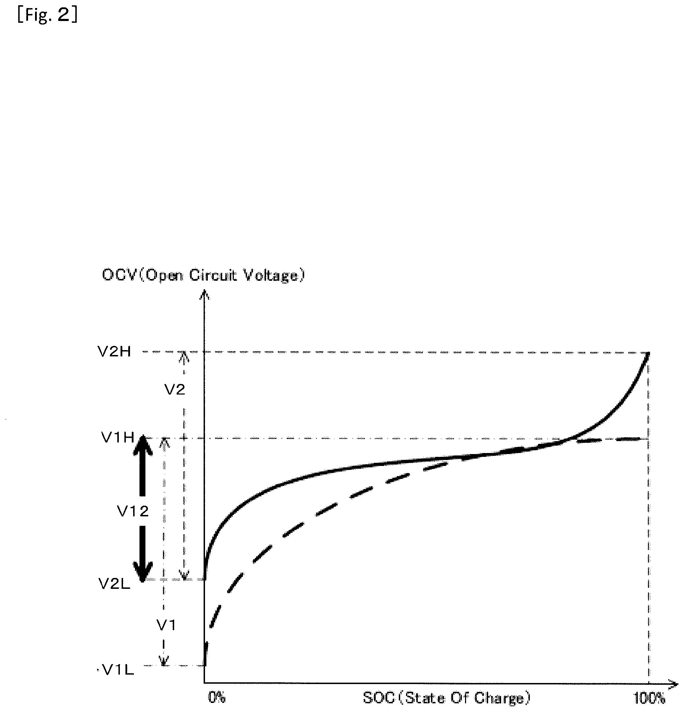

In the present embodiment, the voltage (potential) window of each of the electric storage devices (first electric storage device 10 and second electric storage device 20) is set as a voltage range from an open circuit voltage (OCV) in a case where the state of charge (SOC) of the corresponding electric storage device is 0% to the OCV in a case where the SOC is 100%. For example, in a case where the electric storage devices 10, 20 have SOC-OCV characteristics shown in Fig. 2, the voltage (potential) window V1 of the first electric storage device 10 is a voltage range of V1L to V1H, and the voltage (potential) window V2 of the second electric storage device 20 is a voltage range of V2L to V2H. Therefore, an overlap range of the voltage window V1 and the voltage window V2 is a voltage range (V12 of Fig. 2) of V2L to V1H. This voltage range V12 is a voltage range which can be used in the electric power storage apparatus 1.

The remaining capacity of the electric power storage apparatus 1 which is represented by a product of the SOC and the capacity is the amount of electric power which can be discharged by the electric power storage apparatus 1, and is estimated as follows, Here, it is assumed that the first electric storage device 10 includes the capacitor cell 11a and the second electric storage device 20 includes the secondary battery cells 21a, as in the case of the electric power storage apparatus 1 of Fig. 1.

In a case where the capacity of the second electric storage device 20 is much larger than that of the first electric storage device 10 and hence the capacity of the first electric storage device 10 is negligible, the remaining capacity of the electric power storage apparatus 1 is almost equal to that of the second electric storage device 20. The remaining capacity of the second electric storage device 20 can be estimated by a known method disclosed in, for example, Japanese Laid-Open Patent Application Publication No. 2009-257775. Therefore, the remaining capacity of the second electric storage device 20 obtained in this way is estimated as the remaining capacity of the electric power storage apparatus 1.

On the other hand, in a case where the capacity of the first electric storage device 10 is not negligible, the remaining capacity of the second electric storage device 20 can be derived (found) in view of the remaining capacity of the first electric storage device 10. For example, in the example of Fig. 3, a current meter 30 is connected to the electric power storage apparatus 1. In a case where a current value measured by the current meter 30 is indicated by I, a change amount Δ Q of the remaining capacity Q of the electric power storage apparatus 1 is represented by a formula (Δ Q = -∫ Idt). In a case where the remaining capacity of the first electric storage device 10 is indicated by Qc, a change amount Δ Qb of the remaining capacity Qb of the second electric storage device 20 is represented by a formula (Δ Qb = Δ Q - Δ Qc).

When the current value I is zero, the OCV of the first electric storage device 10 is equal to a terminal voltage V of the electric power storage apparatus 1. Therefore, a change amount Δ Qc of the remaining capacity Qc of the first electric storage device 10 is represented by a formula (Δ Q c = Δ(CV ^ 2) /2 = C/2 · Δ(V ^ 2)). In this formula, C indicates electrostatic capacity (capacitance) of the capacitor cell 11a constituting the first electric storage device 10, and V indicates the voltage of the capacitor cell 11a. Therefore, the remaining capacity Qc of the first electric storage device 10 and the remaining capacity Qb of the second electric storage device 20 are derived based on the terminal voltage V of the electric power storage apparatus 1 and the current value I measured by the current meter 30.

In accordance with the electric power storage apparatus 1 with the above-described configuration, a part or all of the voltage (potential) window of the first electric storage device 10 overlaps with that of the second electric storage device 20. Therefore, the first electric storage device 10 with an internal resistance lower than that of the second electric storage device 20 is charged and discharged with a priority over the second electric storage device 20. For this reason, it is not necessary to actively perform a control for charging and discharging the first electric storage device 10 with a priority over the second electric storage device 20. This can eliminate a need for the DC/DC converter used to perform this control. As a result, the first electric storage device 10 and the second electric storage device 20 can be directly connected to each other (without the DC/DC converter interposed between them), which can reduce the size of the electric power storage apparatus 1 and simplify the configuration of the electric power storage apparatus 1. For example, the life of the second electric storage device 20, including the secondary battery cells 21a, depends on the number of times the second electric storage device 20 is charged and discharged. Since the number of times the second electric storage device 20 is charged and discharged can be reduced, and the depth of charging and discharging the second electric storage device 20 can be reduced, the life of the second electric storage device 20 can be extended.

The first electric storage device 10 includes the first electric storage cell 11 with a high power density. The second electric storage device 20 includes the second electric storage cells 21 with a high energy density. The voltage (potential) windows of the electric storage devices 10, 20 are adjusted depending on the number of electric storage cells 11, 21 (one or a plurality of electric storage cells 11 are connected to each other in series, and one or a plurality of electric storage cells 21 are connected to each other in series). This makes it possible to easily realize the electric power storage apparatus 1 with a high power density and a high energy density.

### (Modified Example 1)

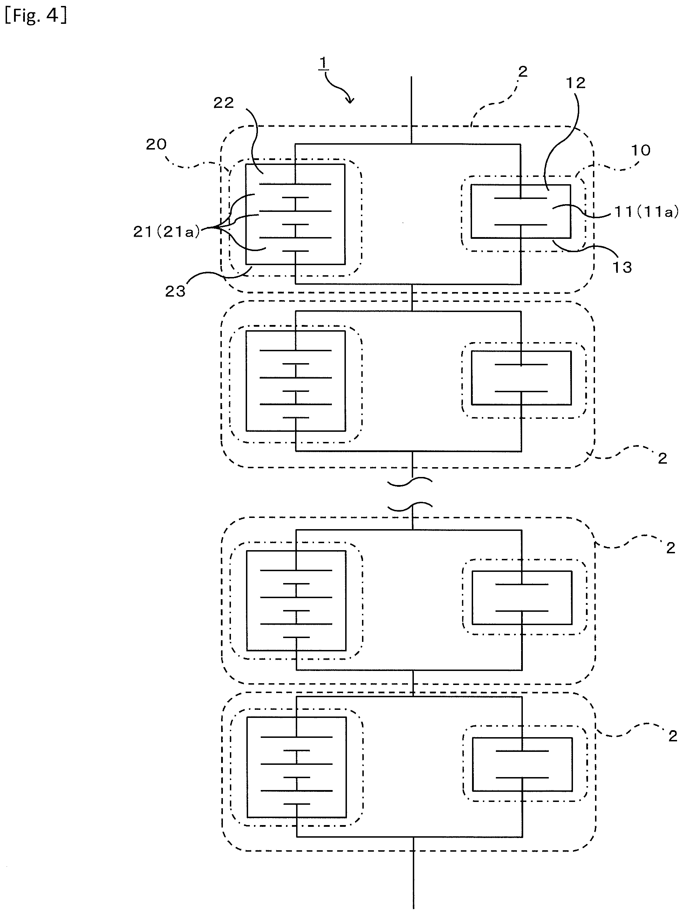

In a case where an electric storage pack 2 includes the first electric storage device 10 and the second electric storage device 20 which are connected in parallel, the electric power storage apparatus 1 of Fig. 1 includes one electric storage pack 2. However, the number of the electric storage packs 2 constituting the electric power storage apparatus 1 is not limited to one. For example, as shown in Modified Example 1 of Fig. 4, the electric power storage apparatus 1 may include a plurality of electric storage packs 2 which are connected to each other in series.

### (Modified Example 2)

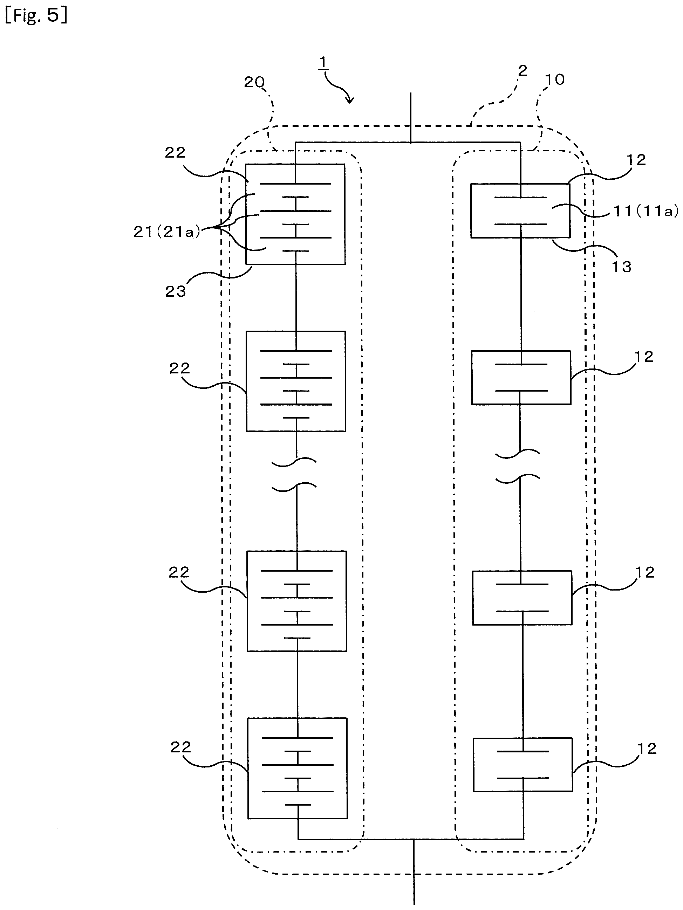

Although in the electric power storage apparatus 1 of Fig. 1, the first electric storage device 10 includes one first electric storage module 12, and the second electric storage device 20 includes one second electric storage module 22, the number of the electric storage modules 12 constituting the first electric storage device 10 and the number of the electric storage modules 22 constituting the second electric storage device 20 are not limited to one. For example, as shown in Fig. 5, in the electric power storage apparatus 1 according to Modified Example 2, the first electric storage device 10 includes a plurality of first electric storage modules 12, and the second electric storage device 20 includes a plurality of second electric storage modules 22. In this case, in the electric storage devices 10, 20, the plurality of first electric storage modules 12 are connected to each other in series, and the plurality of second electric storage modules 22 are connected to each other in series.

### (Modified Example 3)

In the electric power storage apparatus 1 of Fig. 1, the number of the first electric storage modules 12 constituting the first electric storage device 10 is equal to the number of the second electric storage modules 22 constituting the second electric storage device 20. However, the number of the first electric storage modules 12 and the number of the second electric storage modules 22 may be different from each other so long as the internal resistance of the first electric storage device 10 is lower than that of the second electric storage device 20 and a part or all of the voltage (potential) window of the first electric storage device 10 overlaps with that of the second electric storage device 20.

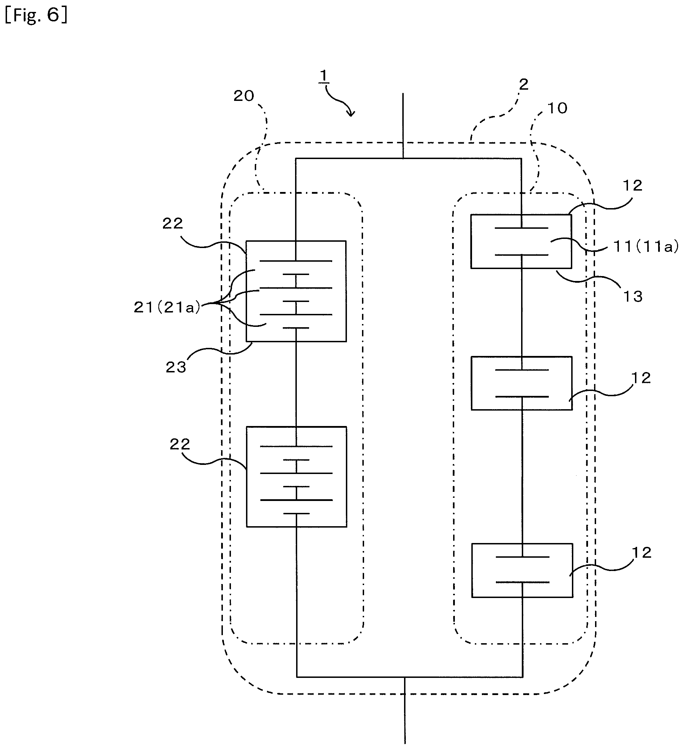

For example, as shown in Fig. 6, in the electric power storage apparatus 1 according to Modified Example 3, the first electric storage device 10 includes three first electric storage modules 12, while the second electric storage device 20 includes two second electric storage modules 22. Here it is assumed that the voltage (potential) window of each of the first electric storage modules 12 is 20 to 35V, and the voltage (potential) window of each of the second electric storage modules 22 is 40 to 50V. In this case, the voltage (potential) window of the first electric storage module 12 and the voltage (potential) window of the second electric storage module 22 do not overlap with each other. However, the voltage (potential) window of the first electric storage device 10 is 60 to 105V, and the voltage (potential) window of the second electric storage device 20 is 80 to 100V. Therefore, in a voltage range of 80 to 100V, the voltage (potential) window of the first electric storage device 10 and the voltage (potential) window of the second electric storage device 20 overlap with each other. In this way, the number of the first electric storage modules 12 and the number of the second electric storage modules 22 are adjusted so that the voltage (potential) window of the first electric storage device 10 and the voltage (potential) window of the second electric storage device 20 overlap with each other.

As described above, the internal resistance of the first electric storage device 10 is required to be lower than that of the second electric storage device 20. For this reason, the internal resistances of the electric storage devices 10, 20 may be adjusted (set) by utilizing a design idea described in Embodiment 2 below, as desired.

As shown in Fig. 4, a plurality of electric storage packs 2 of Fig. 6 may be connected in series to construct the electric power storage apparatus 1.

### (Embodiment 2)

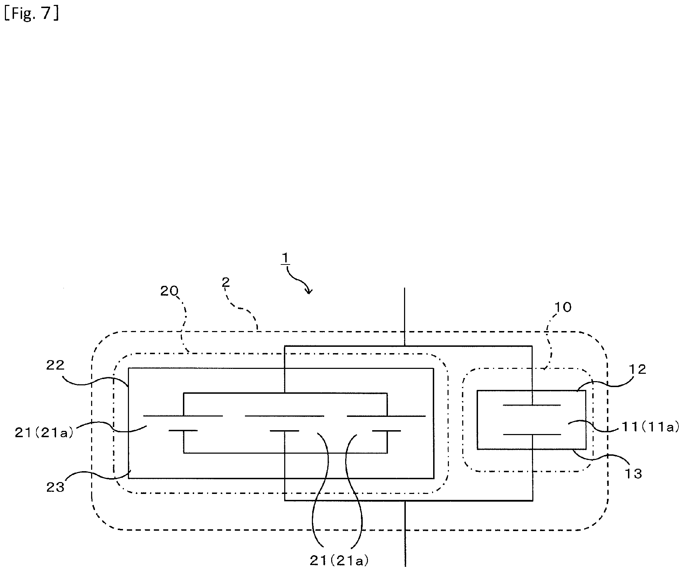

The configuration of the electric power storage apparatus 1 according to Embodiment 2 will be described with reference to Fig. 7. In the electric power storage apparatus 1 according to Embodiment 2, the number of the first electric storage cells 11 connected in parallel and/or the number of the second electric storage cells 21 connected in parallel are/is set so that the internal resistance the first electric storage device 10 becomes lower than that of the second electric device 20, in a case where a part or all of the voltage (potential) window of the first electric storage device 10 overlaps with that of the second electric storage device 20. The number of the first electric storage cells 11 connected in parallel is defined as the number of the first electric storage cells 11 connected to each other in parallel in the first electric storage device 10. The number of the second electric storage cells 21 connected in parallel is defined as the number of the second electric storage cells 21 connected to each other in parallel in the second electric storage device 20.

In a case where the first electric storage cells 11 are not connected in series and connected in parallel in the first electric storage device 10 and the second electric storage cells 21 are not connected in series and connected in parallel in the second electric storage device 20, the reciprocal of the internal resistance of the first electric storage device 10 is a sum of the reciprocals of the internal resistances of the first electric storage cells 11, and the reciprocal of the internal resistance of the second electric storage device 20 is a sum of the reciprocals of the internal resistances of the second electric storage cells 21. As the number of the first electric storage cells 11 connected in parallel and the number of the second electric storage cells 21 connected in parallel are increased, the internal resistance of the first electric storage device 10 and the internal resistance of the second electric storage device 20 are reduced. For example, in the example of Fig. 7, the number of the second electric storage cells 21 connected in parallel is set to three so that the internal resistance the first electric storage device 10 becomes lower than that of the second electric device 20. Note that the voltage (potential) window of the first electric storage cell 11 and the voltage (potential) window of the second electric storage cells 21 overlap with each other.

As described above, depending on a ratio between the number of the first electric storage cells 11 connected in parallel and the number of the second electric storage cells 21 connected in parallel, a power (output) ratio between the first electric storage device 10 and the second electric storage device 20 can be adjusted as desired. Further, in a case where the plurality of first electric storage cells 11 are connected in series in the first electric storage device 10 and the plurality of second electric storage cells 21 are connected in series in the second electric storage device 20, the internal resistance of the first electric storage device 10 is a sum of the internal resistances of the first electric storage cells 11, and the internal resistance of the second electric storage device 20 is a sum of the internal resistances of the second electric storage cells 21. Therefore, depending on the ratio between the number of the first electric storage cells 11 connected in parallel and the number of the second electric storage cells 21 connected in parallel, and the ratio between the number of the first electric storage cells 11 connected in series and the number of the second electric storage cells 21 connected in series, the power (output) ratio between the first electric storage device 10 and the second electric storage device 20 can be adjusted more flexibly.

### (Embodiment 3)

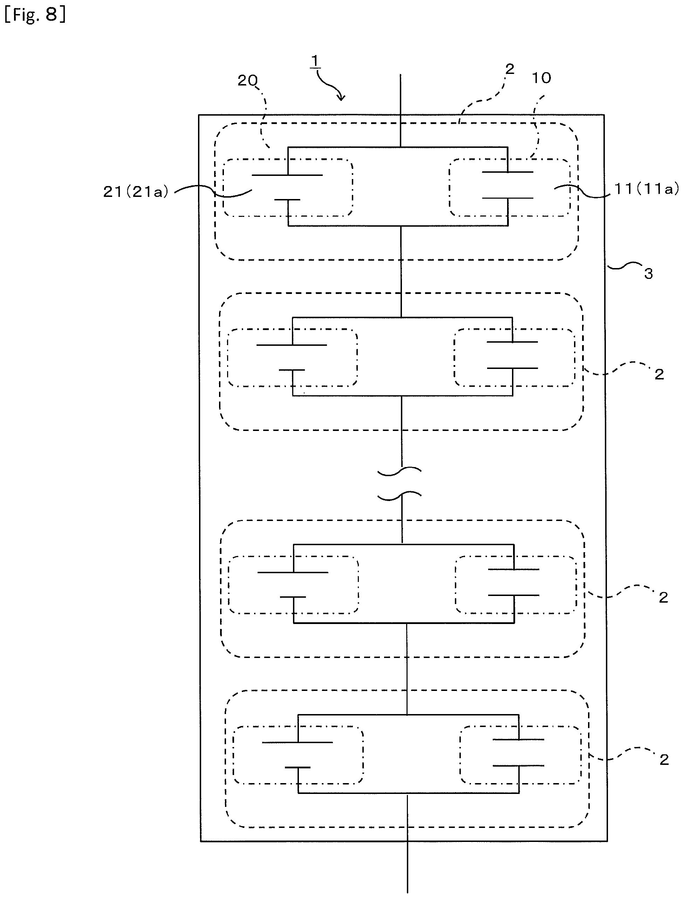

The configuration of the electric power storage apparatus 1 according to Embodiment 3 will be described with reference to Fig. 8. In the electric power storage apparatus 1 according to Embodiment 3, one or the plurality of first electric storage cells 11 connected to each other and one or the plurality of second electric storage cells 21 connected to each other may be connected to each other in parallel, to construct the electric storage module.

In the electric power storage apparatus 1 according to Embodiment 1, one or the plurality of first electric storage cells 11 is/are accommodated in the first case 13, and one or the plurality of second electric storage cells 21 is/are accommodated in the second case 23. In contrast, in the electric storage devices 10, 20 of the electric power storage apparatus 1 according to Embodiment 3, one or the plurality of first electric storage cells 11 connected to each other and one or the plurality of second electric storage cells 21 connected to each other are connected to each other in parallel, and these electric storage cells 11, 12 are packaged and accommodated together in a case (package case) 3.

In the package case 3, the first electric storage cell(s) 11 and the second electric storage cell(s) 21 are not thermally insulated and are accommodated in the same space of one (single) package case 3. The first electric storage cell(s) 11 is/are charged and discharged before the second electric storage cell(s) 21 is/are charged and discharged. In this configuration, during charge and discharge, the second electric storage cell(s) 21 can operate in a state in which the second electric storage cell(s) 21 is/are heated by reaction heat of the first electric storage cell(s) 11. For example, performance and quality of the first electric storage cell 11 such as the capacitor cell 11a do not depend on the temperature. On the other hand, performance of the second electric storage cell 21 such as the secondary battery cell 21a is reduced or degradation of the second electric storage cell 21 progresses, due to an operation in a low-temperature state. With the above-described configuration, reduction of the performance and quality of the second electric storage cell 21 can be suppressed. As a result, reduction of the performance and life of the electric power storage apparatus 1 can be suppressed.

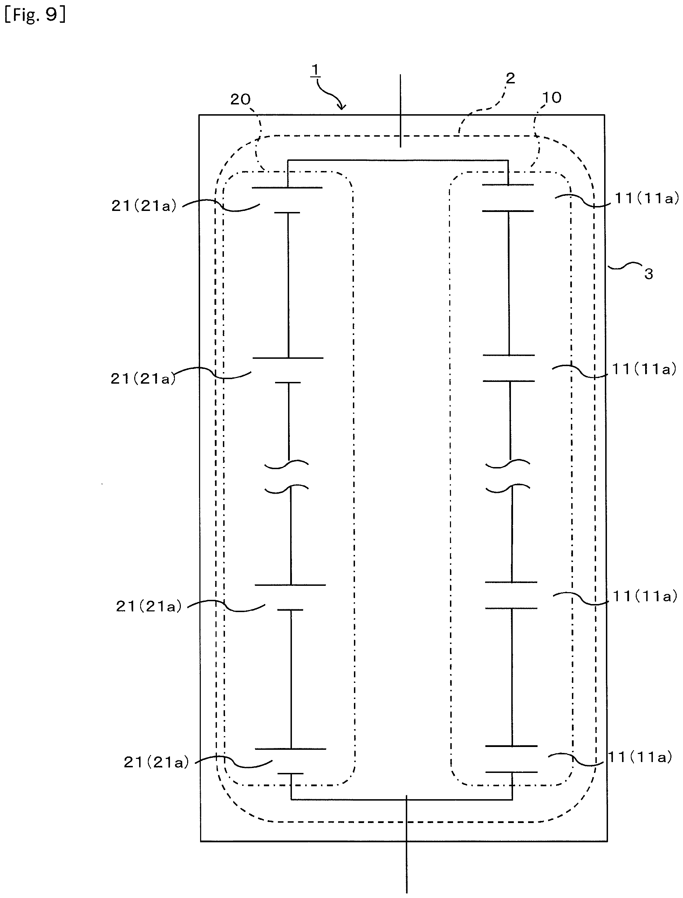

Alternatively, as shown in Fig. 9, the first electric storage cells 11 may be connected to each other in series, and the second electric storage cells 21 may be connected to each other in series. Also, the first electric storage cells 11 may be connected to each other in parallel, and the second electric storage cells 21 may be connected to each other in parallel. In either case, the first electric storage cells 11 and the second electric storage cells 21 which are connected to each other in parallel are accommodated together in the package case 3. In this case, even under a low-temperature environment, the whole of the second electric storage device can be efficiently warmed-up by heating each of the second electric storage cells by the heat generated by charging and discharging the first electric storage cells. This makes it possible to efficiently perform charging and discharging the second electric storage device.

### (Example 1)

As to the characteristics of the electric power storage apparatus 1 with the above-described configuration, test result of the electric power storage apparatus 1 of Fig. 10 will be described with reference to Figs. 11A to 11C. Specifically, the electric power storage apparatus 1 of Fig. 10 is connected to a load 40 via DC links 4 constituted by a pair of wires. In the electric power storage apparatus 1, the first electric storage device 10 includes one capacitor cell 11a, and the second electric storage device 20 includes one secondary battery cell 21a. The internal resistance of the capacitor cell 11a is 1.411mQ. The remaining capacity of capacitor cell 11a is 100%. The capacitance of the capacitor cell 11a is 3300F. The internal resistance of the secondary battery cell 21a is 8.33mQ. The remaining capacity of the secondary battery cell 21a is 64%. The current capacity of the secondary battery cell 21a is 75Ah. Thus, the internal resistance of the first electric storage device 10 is lower than that of the second electric storage device 20. The voltage (potential) window of the first electric storage device 10 overlaps with the voltage (potential) window of the second electric storage device 20.

Figs. 11A to 11C show the results of simulation in a case where the electric power storage apparatus 1 outputs (discharges) 400W. The electric power storage apparatus 1 started to output 400W when 5sec passed after the simulation started. In Figs. 11A to 11C, solid lines indicate values relating to the first electric storage device 10, and broken lines indicate values relating to the second electric storage device 20. A dot-and-dash line in Fig. 11B indicates a voltage between the pair of DC links 4 connected to the electric power storage apparatus 1.

As shown in Fig. 11A, just after the electric power storage apparatus 1 started to output 400W, almost all of an electric current flowing to the load 40 was output from the first electric storage device 10 with a lower internal resistance. After that, as the remaining capacity of the first electric storage device 10 decreased as shown in Fig. 11C, the electric current of the first electric storage device 10 decreased as shown in Fig. 11A and the OCV of the first electric storage device 10 decreased as shown in Fig. 11B. As a result, the output voltage of the second electric storage device 20 with respect to the OCV of the first electric storage device 10 increased, so that the second electric storage device 20 mainly output the electric current to the load 40.

As described above, the first electric storage device 10 with a power density higher than that of the second electric storage device 20 output (discharged) an electric current with a priority over the second electric storage device 20. After that, the second electric storage device 20 with an energy density higher than that of the first electric storage device 10 mainly output an electric current. This makes it possible to achieve a high energy density and a high power density in the electric power storage apparatus 1 which has a small size and a simplified configuration and does not need the DC/DC converter.

### (Example 2)

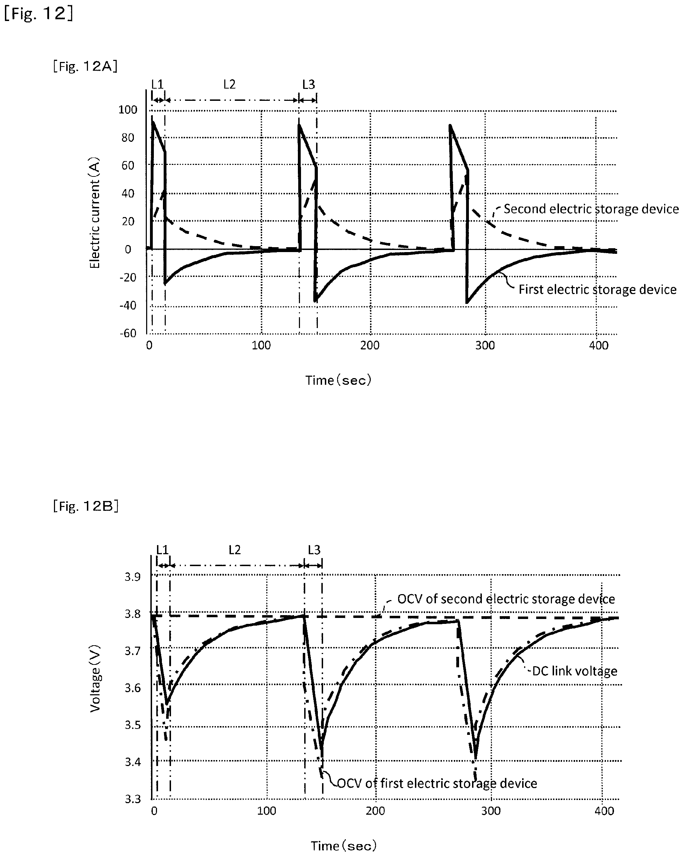

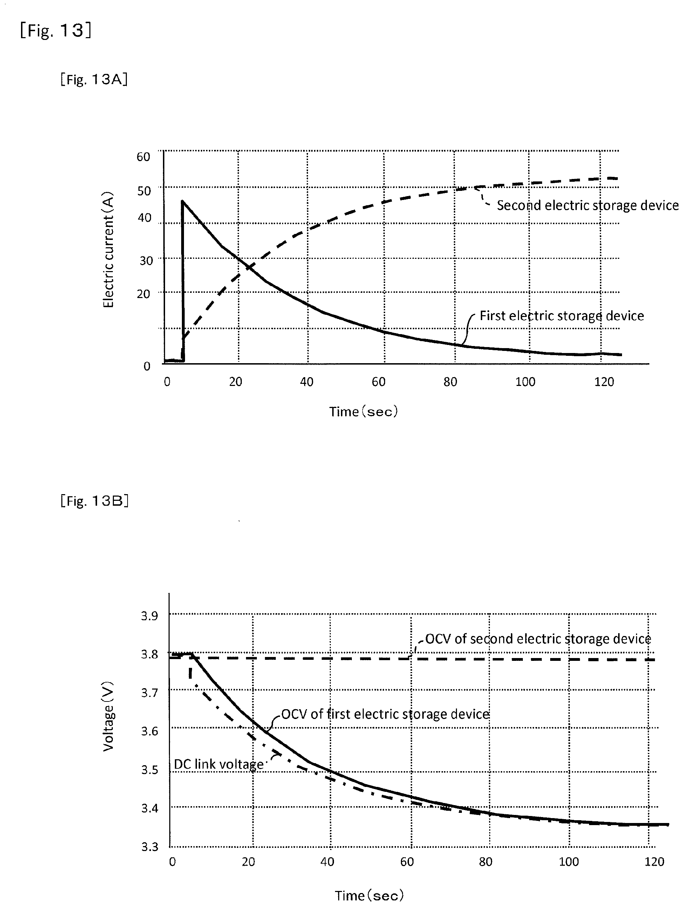

As to the characteristics of the electric power storage apparatus 1 which can achieve a high energy density and a high power density, test result of the electric power storage apparatus 1 in Example 2 will be described with reference to Figs. 12A to 12C and 13A to 13C. Specifically, a simulation was conducted by use of a first load which requires a high power (output) for a short time and a second load which requires a low power (output) for a long time. The electric power storage apparatus 1 output 400W to the first load for 10 seconds three times in repetition at intervals of 30 seconds. The electric power storage apparatus 1 output 200W to the second load once for 120 seconds. The electric power storage apparatus 1 started to output an electric current when 5 second passed after the simulation started. As the electric power storage apparatus 1 in Example 2, the electric power storage apparatus 1 of Fig. 10 was used, and the load 40 was used as the first and second loads.

As shown in Figs. 12A and 12B, in the result of simulation for the first load, while the electric power storage apparatus 1 was outputting 400W for 10 seconds (period L1 of Fig. 12A), most of an electric current output was output from the first electric storage device 10. By discharging the first electric storage device 10 for the period L1, a difference in the OCV between the second electric storage device 20 and the first electric storage device 10 occurred.

After that, in an interval of 30 seconds (period L2 of Fig. 12A), the electric current flowed from the second electric storage device 20 to the first electric storage device 10, due to the difference in the OCV between the first electric storage device 10 and the second electric storage device 20. As a result, for the period L2, energy was supplied from the second electric storage device 20 to the first electric storage device 10.

Since the first electric storage device 10 was charged for the period L2, most of an electric current output, corresponding to the power (output) of 400W, was output from the first electric storage device 10, for 10 seconds in a period L3 following the period L2.

As shown in Figs. 13A and 13B, in the result of simulation for the second load, just after the electric power storage apparatus 1 started to output an electric current, most of the electric current output was output from the first electric storage device 10. However, with time, the OCV of the first electric storage device 10 decreased, and the electric current output from the first electric storage device 10 decreased and approached zero. Thus, the electric current output from the second electric storage device 20 increased.

As described above, for the first load which requires a high power (output) for a short time, the high power (output) characteristic of the first electric storage device 10 worked. In contrast, for the second load which requires a low power (output) for a long time, the high energy characteristic of the second electric storage device 20 worked. Therefore, by utilizing a difference in the internal resistance between the first electric storage device 10 and the second electric storage device 20, it becomes possible to realize the electric power storage apparatus 1 which can achieve a high power (output) and a high energy. Since this characteristic is obtained by utilizing the difference in the internal resistance between the second electric storage device 20 and the first electric storage device 10, the DC/DC converter is not necessary, so that the size of the electric power storage apparatus 1 can be reduced, and the control for the electric power storage apparatus 1 can be simplified.

### (Example 3)

As to the characteristics of the electric power storage apparatus 1 including the electric storages cells 11 connected to each other in parallel and the electric storage cells 21 connected to each other in parallel, the test result of the electric power storage apparatus 1 in Example 3 of Fig. 14A will be described with reference to Fig. 14B. Specifically, the electric power storage apparatus 1 of Fig. 14A is connected to the load 40 via the DC links 4 constituted by a pair of wires. The first electric storage device 10 includes two capacitor cells 11a connected to each other in parallel and the second electric storage device 20 includes one secondary battery cell 21a. The capacitor cell 11a is the capacitor cell 11a of Fig. 10. The secondary battery cell 21a is the secondary battery cell 21a of Fig. 10.

By use of this electric power storage apparatus 1, the same simulation as that for the second load which requires a low power (output) for a long time in Example 2 was conducted. The internal resistance of the first electric storage device 10 of Fig. 14A was the half of the internal resistance of the first electric storage device 10 of Fig. 10. The capacitance of the first electric storage device 10 of Fig. 14A was twice as high as the capacitance of the first electric storage device 10 of Fig. 10. Therefore, as shown in Fig. 14B, a ratio (ratio of electric current) of the load covered by the first electric storage device 10 with respect to the load covered by the second electric storage device 20 in the example of Fig. 14A was higher than the ratio in the example of Fig. 10. In addition, time for which the first electric storage device 10 covered the load more than the load covered by the second electric storage device 20 (the electric current output from the first electric storage device 10 was higher than the electric current output from the second electric storage device 20) in the example of Fig. 14A was longer than that in the example of Fig. 10.

As described above, depending on the number of the first electric storage cells 11 connected in parallel in the first electric storage device 10 and the number of the second electric storage cells 21 connected in parallel in the second electric storage device 20, the power (output) characteristics and capacities of the first electric storage device 10 and the second electric storage device 20 can be adjusted as desired to meet the demand.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention.

### Industrial Applicability

An electric power storage apparatus of the present invention is useful as an electric power storage apparatus or the like, which can achieve a high energy density and a high power density, while reducing its size and simplifying its configuration.

### Reference Signs List

- 1: electric power storage apparatus
- 10: first electric storage device
- 11: first electric storage cell
- 12: first electric storage module
- 20: second electric storage device
- 21: second electric storage cell
- 22: second electric storage module

## Claims

1. An electric power storage apparatus comprising:
a first electric storage device; and
a second electric storage device,
wherein the first electric storage device has an inner resistance lower than an inner resistance of the second electric storage device and has a power density higher than a power density of the second electric storage device, and the second electric storage device has an energy density higher than an energy density of the first electric storage device,
wherein the first electric storage device and the second electric storage device are connected in parallel, and
wherein a voltage window of the first electric storage device and a voltage window of the second electric storage device at least partially overlap with each other.

2. The electric power storage apparatus according to claim 1,
wherein the first electric storage device includes one or a plurality of first electric storage cells connected to each other in series, and the second electric storage device includes one or a plurality of second electric storage cells connected to each other in series, and
wherein the number of the first electric storage cells connected to each other in series and the number of the second electric storage cells connected to each other in series are set so that the voltage window of the first electric storage device and the voltage window of the second electric storage device at least partially overlap with each other.

3. The electric power storage apparatus according to claim 1 or 2,
wherein the first electric storage device includes one or a plurality of first electric storage cells connected to each other in parallel, and the second electric storage device includes one or a plurality of second electric storage cells connected to each other in parallel, and
wherein the number of the first electric storage cells connected to each other in parallel and the number of the second electric storage cells connected to each other in parallel are set so that the internal resistance of the first electric storage device becomes lower than the internal resistance of the second electric storage device.

4. The electric power storage apparatus according to any one of claims 1 to 3,
wherein one or a plurality of first electric storage cells connected to each other and one or a plurality of second electric storage cells connected to each other are connected to each other in parallel to construct an electric storage module.
